# EUROPEAN PATENT APPLICATION

(11) **EP 4 645 659 A1**
(43) Date of publication of application: **05.11.2025**
(21) Application number: 24766241.4
(22) Date of filing: 04.02.2024
(51) Int. Cl.: H02K 21/14, H02K 1/16, H02K 1/276, H02K 5/18

(54) **WHEELED ELECTRICAL TOOL**

(30) Priority: 09.03.2023 CN 202320435212 U
(71) Applicant: Nanjing Chervon Industry Co., Ltd., Nanjing, Jiangsu 211106 (CN)
(72) Inventor: HU, Chenglong, Nanjing, Jiangsu 211106 (CN); MENG, Chao, Nanjing, Jiangsu 211106 (CN)
(74) Representative: Sun, Yiming
(86) International application number: PCT/CN2024/075685
(87) International publication number: WO 2024/183519

(57) **Abstract**

A wheeled power tool includes: a body; a walking mechanism, where the walking mechanism includes walking wheels supporting the body; and an electric motor configured to drive the walking wheels to rotate, where the electric motor includes a stator and a rotor rotating relative to the stator, the stator includes a stator core and multiple windings disposed on the stator core, the stator core includes tooth portions for winding the multiple windings, and the rotor includes a rotor core and multiple magnetic steels disposed on the rotor core. The number of the tooth portions is 12. The number of magnetic pole pairs formed by the multiple magnetic steels is 10 or 14. The included angle α between two corresponding magnetic steels forming each of the magnetic pole pairs is greater than or equal to 30° and less than or equal to 45°.

## Description

This application claims priority to Chinese Patent Application No. 202320435212.7 filed with the China National Intellectual Property Administration (CNIPA) on Mar. 9, 2023, the disclosure of which is incorporated herein by reference in its entirety.

### TECHNICAL FIELD

The present application relates to the technical field of power tools, for example, a wheeled power tool.

### BACKGROUND

An electric motor in the related art generally includes a housing, a stator, and a rotor. Windings are disposed on the stator and generally formed by winding insulated copper wires. The rotor includes a magnet and has a determined number of poles. Specifically, a rotor core in the rotor includes multiple rotor laminations. A flat keyway, a magnetic steel slot, and a lightening hole are typically provided on a rotor lamination. A magnetic steel is placed in the magnetic steel slot. The magnetic steel is magnetized to form a magnet such that a main magnetic field of the electric motor is established.

A large wheeled power tool that operates outdoors requires relatively large motor torque. 16 magnetic steels are arranged in most related electric motors to form 8 magnetic pole pairs. Therefore, the electric motors have relatively low torque densities and low utilization rates of magnetic steels, which directly affect the improvement of the efficiency of the electric motors.

This part provides background information related to the present application, and the background information is not necessarily the existing art.

### SUMMARY

An object of the present application is to solve or at least alleviate part or all of the preceding problems. To this end, an object of the present application is to provide a wheeled power tool to improve the utilization rate of magnetic steels. Thus, the torque density of an electric motor is increased, and the efficiency of the electric motor is improved, thereby solving the technical problem that the electric motors have low torque densities and low utilization rates of magnetic steels in the related art.

To achieve the preceding object, the present application adopts the technical solutions below.

A wheeled power tool includes: a body; a walking mechanism, where the walking mechanism includes walking wheels supporting the body; and an electric motor configured to drive the walking wheels to rotate, where the electric motor includes a stator and a rotor rotating relative to the stator, the stator includes a stator core and multiple windings disposed on the stator core, the stator core includes tooth portions for winding the multiple windings, and the rotor includes a rotor core and multiple magnetic steels disposed on the rotor core. The number of the tooth portions is 12. The number of magnetic pole pairs formed by the multiple magnetic steels is 10 or 14. The included angle α between two corresponding magnetic steels forming each of the magnetic pole pairs is greater than or equal to 30° and less than or equal to 45°.

A wheeled power tool includes: a body; an actuator configured to perform a function of the wheeled power tool; a walking mechanism, where the walking mechanism includes walking wheels supporting the body; and an electric motor configured to drive the executing mechanism to operate. The electric motor includes a stator and a rotor rotating relative to the stator. The stator includes a stator core and multiple windings disposed on the stator core. The rotor includes a rotor core and multiple magnetic steels disposed on the rotor core. The multiple magnetic steels form multiple magnetic pole pairs. The included angle α between two corresponding magnetic steels forming each of the magnetic pole pairs is greater than or equal to 30° and less than or equal to 45°.

### BRIEF DESCRIPTION OF DRAWINGS

FIG. 1 is a structural view of a mower according to an example of the present application.
FIG. 2 is a structural view of a snow thrower according to an example of the present application.
FIG. 3 is a structural view of an outdoor walking vehicle according to an example of the present application.
FIG. 4 is a structural view of an electric motor according to an example of the present application.
FIG. 5 is a side view showing some structures of an electric motor according to an example of the present application.
FIG. 6 is a schematic view showing some structures in FIG. 5.
FIG. 7 is an exploded view showing some structures of an electric motor according to an example of the present application.
FIG. 8 is a schematic diagram showing the wire arrangement of windings according to an example of the present application.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

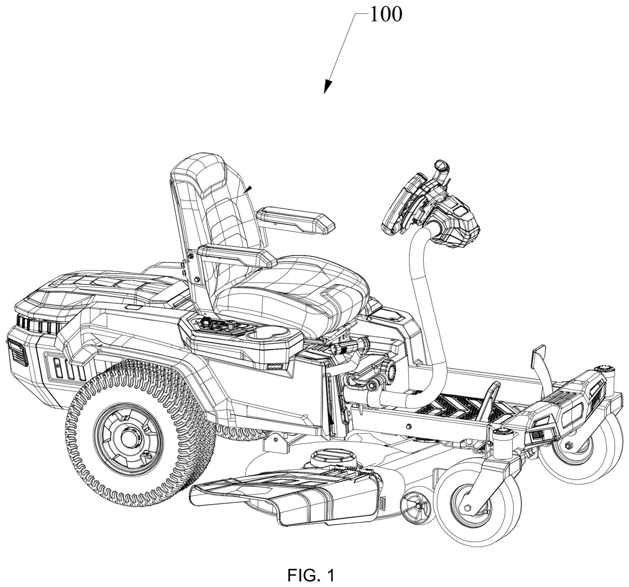

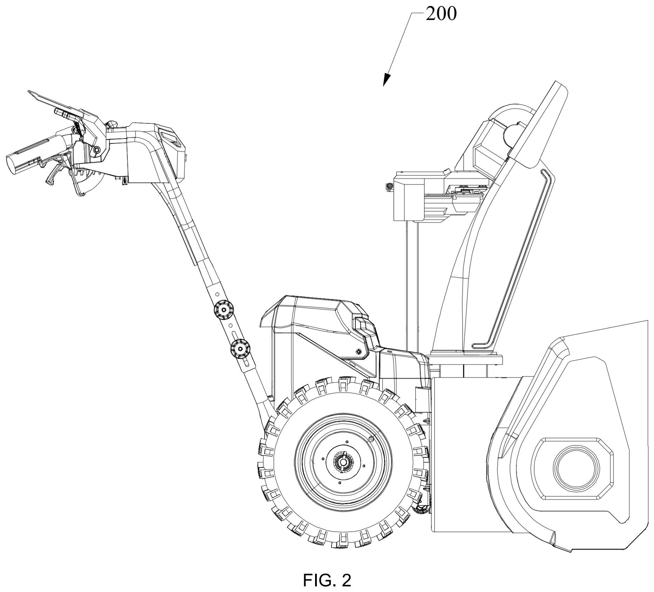

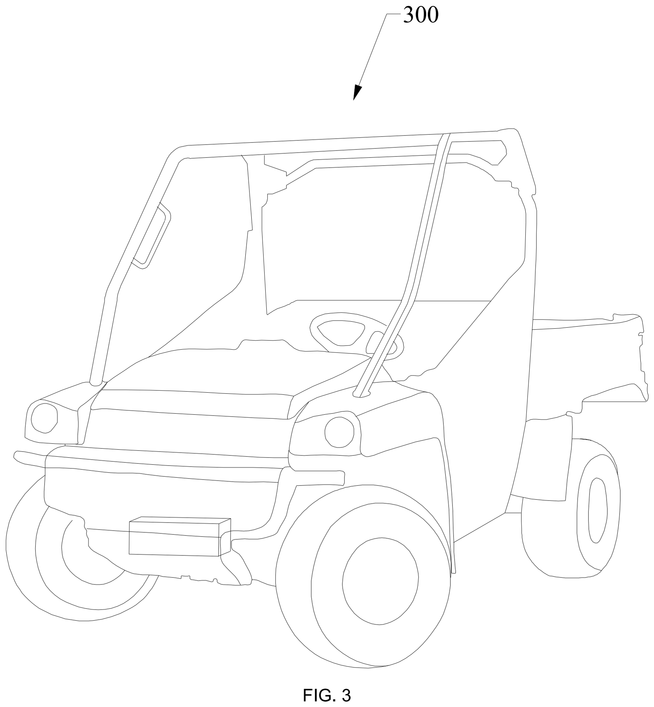

Referring to FIGS. 1 to 3, an example of the present application provides an electric travel device. The electric travel device may be a mower 100, a snow thrower 200, or an outdoor walking vehicle 300. The electric travel device includes a body, a walking mechanism, and an electric motor. The walking mechanism includes walking wheels supporting the body. The electric motor is configured to drive the walking wheels to rotate.

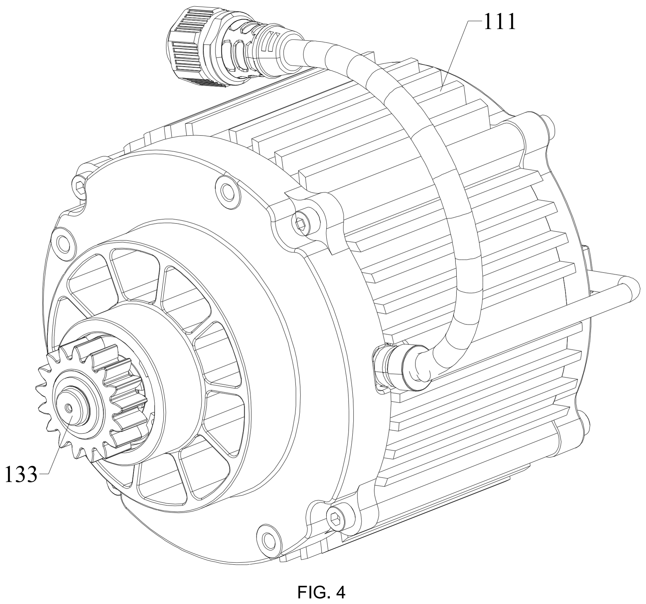

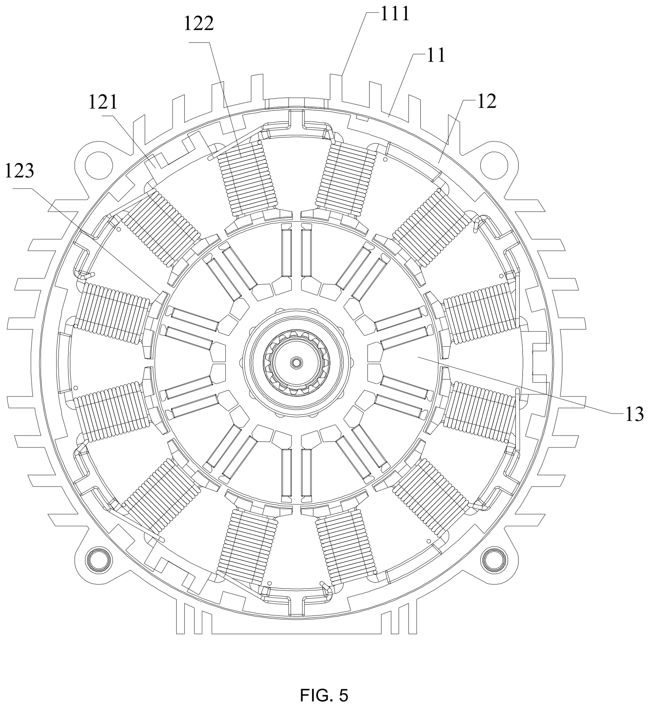

Referring to FIGS. 4 to 8, the electric motor includes a housing 11 and a stator 12 and a rotor 13 disposed in the housing 11. The rotor 13 is located in the stator 12 and is rotatable relative to the stator 12. The stator 12 includes a stator core 121 and multiple windings 122 disposed on the stator core 121. The stator core 121 includes tooth portions 123 for winding the windings 122. The rotor 13 includes a rotor core 131 and multiple magnetic steels 132 disposed on the rotor core 131. The number of the tooth portions 123 is 12. The number of magnetic pole pairs formed by the multiple magnetic steels 132 is 10 or 14. The included angle α between two corresponding magnetic steels 132 forming each of the magnetic pole pairs is greater than or equal to 30° and less than or equal to 45°. In some examples, the included angle α between the two magnetic steels 132 forming each of the magnetic pole pairs is greater than or equal to 35° and less than or equal to 40°. With the preceding layout of the windings 122 and the magnetic steels 132, the utilization rate of each of the magnetic steels 132 is improved. Thus, the torque density of the electric motor is higher, and the efficiency of the electric motor is improved.

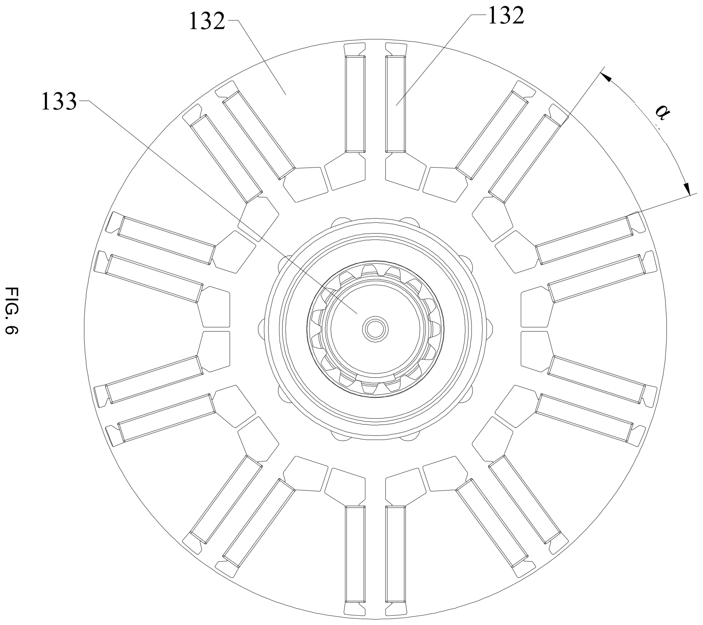

In an example, the rotor 13 is provided with magnet slots, and the magnetic steels 132 are disposed in the magnet slots. It is to be understood that the number of the magnetic steels 132 is 20 or 28, the 20 magnetic steels 132 form 10 magnetic pole pairs, and the 28 magnetic steels 132 form 14 magnetic pole pairs. FIG. 6 shows the included angle α between two magnetic steels 132 forming a magnetic pole pair. In this example, α is equal to 36°.

Referring to FIG. 4, the housing 11 is made of a die-cast aluminum material or an aluminum profile and has a wall thickness of from 2 mm to 3.5 mm. A heat dissipation structure is provided on the outer peripheral surface of the housing 11. The heat dissipation structure includes multiple heat dissipation ribs 111. The multiple heat dissipation ribs 111 are evenly spaced around the periphery of the housing 11. The distance between every two adjacent heat dissipation ribs 111 is from 5 mm to 10 mm, and the height of each of the heat dissipation ribs 111 is from 5 mm to 12 mm. Heat is dissipated naturally through the heat dissipation ribs 111, thereby increasing the heat dissipation area of the housing 11 and improving a heat dissipation effect.

The rotor 13 further includes a rotating shaft 133. The rotating shaft 133 is inserted through the rotor core 131 and is fixedly connected to the rotor core 131. When a current passes through the windings, a magnetic field causing the rotor 13 to rotate is generated, and the rotating shaft 133 rotates accordingly. A fan is disposed on the rotating shaft 133, and the heat of the electric motor can be dissipated through the rotation of the fan. The fan and the heat dissipation ribs 111 can simultaneously exist, thereby improving the heat dissipation effect.

In this example, the rated power of the electric motor ranges from 1.5 kW to 8 kW. The electric motor can have a relatively high power to meet the requirements of various electric travel devices. In some examples, the rated power of the electric motor ranges from 3 kW to 6 kW and may specifically be 3 kW, 4.5 kW, 5 kW, 5.5 kW, or 6 kW. In some examples, the rated power of the electric motor ranges from 5 kW to 8 kW.

The rotational speed of the electric motor ranges from 1000 rpm to 12000 rpm. A relatively wide range of the rotational speed is adaptable to the requirements of different working conditions. In some examples, the rotational speed of the electric motor ranges from 5000 rpm to 8000 rpm and may specifically be 5000 rpm, 6000 rpm, 7000 rpm, or 8000 rpm. In some examples, the rotational speed of the electric motor ranges from 9000 rpm to 12000 rpm and may specifically be 9000 rpm, 10000 rpm, 11000 rpm, or 12000 rpm.

The operating voltage of the electric motor is 56 V, and/or the maximum value of the operating current of the electric motor is from 30 A to 150 A.

The outer diameter of the stator 12 is from 120 mm to 135 mm, and/or the split ratio of the stator 12 is from 0.5 to 0.6. The split ratio of the stator 12 is equal to the inner diameter of the stator 12 divided by the outer diameter of the stator 12.

An air gap is formed between the stator 12 and the rotor 13, and the air gap ranges from 0.4 mm to 0.75 mm. Optionally, the air gap is 0.5 mm.

The ratio of the length of each of the magnetic steels 132 to the radius of the rotor 13 is from 0.3 to 0.4. In an example, the length of each of the magnetic steels 132 is from 11 mm to 13.5 mm, and/or the radius of the rotor 13 is from 65/2 mm to 75/2 mm.

The electric travel device provided in this example may be a table tool or an electric travel apparatus, which has a relatively high requirement on the efficiency of the electric motor. Therefore, with the preceding layout of the windings 122 and the magnetic steels 132, the utilization rate of each of the magnetic steels 132 is improved, the torque density of the electric motor is higher, and the efficiency of the electric motor is improved.

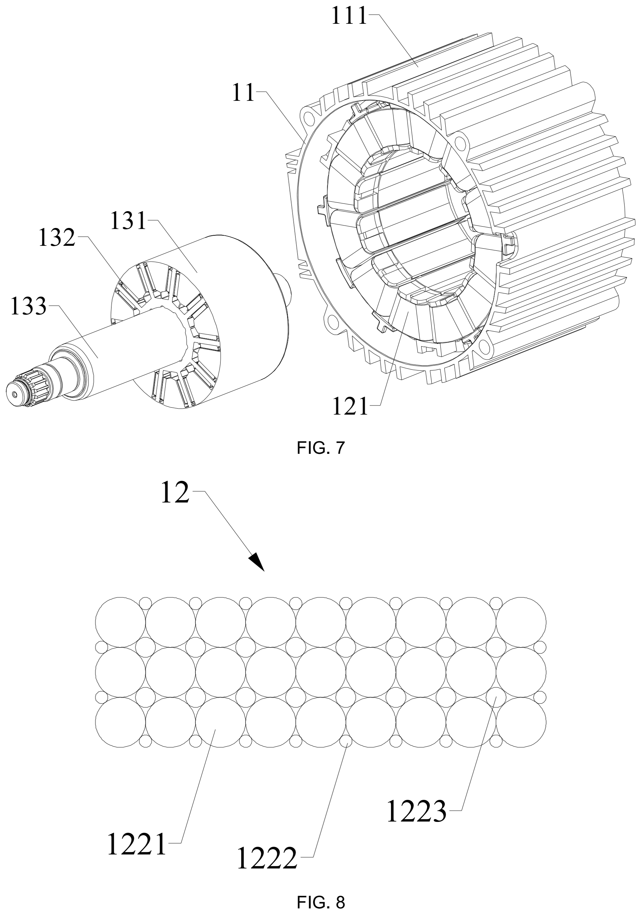

Referring to FIG. 8, each of the windings 122 includes a first wire 1221 and a second wire 1222, and the wire diameter of the first wire 1221 is different from the wire diameter of the second wire 1222. Wires with different wire diameters are used in conjunction, thereby reducing the gap among wires and improving the slot fill factor of the wire arrangement of each of the windings 122. Thus, the efficiency of the electric motor is improved.

In an example, first wires 1221 are arranged on the stator core 121 in a matrix. A first space is formed among every four adjacent first wires 1221, and the second wire 1222 is disposed in the first space. Thus, the gap among the first wires 1221 is fully utilized. In this example, the first wires 1221 are arranged in three layers. From the cross section of the first wires 1221, the first wires 1221 are arranged in a matrix, multiple first spaces are formed between first wires 1221 in two adjacent layers, and one second wire 1222 is disposed in each first space.

The second wire 1222 is disposed in the first space enclosed by the four adjacent first wires 1221. Therefore, to increase the cross-sectional area of the second wire 1222, the second wire 1222 is preferably a cylindrical wire, and the wire diameter of the second wire 1222 is less than or equal to the diameter of the inscribed circle of the first space.

In an example, each of the windings 122 further includes a third wire 1223. The wire diameter of the third wire 1223 is different from the wire diameter of the first wire 1221, and the wire diameter of the third wire 1223 is different from the wire diameter of the second wire 1222. Gaps are further fully utilized, and the slot fill factor of the wire arrangement of each of the windings 122 is improved. Thus, the efficiency of the electric motor is improved.

In an example, third wires 1223 are distributed on the periphery of the first wires 1221, and each of the third wires 1223 is located between two adjacent first wires 1221. The third wires 1223 are provided so that relatively small spaces on the periphery of the first wires 1221 are fully utilized. Specifically, the slot fill factor is greater than 45% when one wire diameter is adopted, and the slot fill factor is greater than 48% when a combination of thick and thin wires with at least two different wire diameters is adopted.

It is to be understood that a stator slot is formed between adjacent tooth portions 123, and the first wires 1221 are closely arranged in the stator slot. The third wire 1223 is disposed at the position so that the gap between the two adjacent first wires 1221 is fully utilized. However, due to a limit effect of the stator slot on the wires, the third wire 1223 with the maximum wire diameter is tangent to both the two first wires 1221 and the stator slot.

An example of the present application further provides a wheeled power tool. The wheeled power tool may be a mower 100 or a snow thrower 200. The wheeled power tool includes a body, an executing mechanism, a walking mechanism, and an electric motor. The walking mechanism includes walking wheels supporting the body. The electric motor is configured to drive the walking wheels to rotate. The executing mechanism may be a cutting deck for mowing grass, an auger assembly, or an impeller assembly. The electric motor includes a stator 12 and a rotor 13 rotating relative to the stator 12. The stator 12 includes a stator core 121 and multiple windings 122 disposed on the stator core 121. The rotor 13 includes a rotor core 131 and multiple magnetic steels 132 disposed on the rotor core 131. The multiple magnetic steels 132 form multiple magnetic pole pairs. The included angle α between two corresponding magnetic steels 132 forming each of the magnetic pole pairs is greater than or equal to 30° and less than or equal to 45°. In some examples, the included angle α between the two magnetic steels 132 forming the magnetic pole pair is greater than or equal to 35° and less than or equal to 40°. With the preceding layout of the magnetic steels 132, the utilization rate of each of the magnetic steels 132 is improved. Thus, the torque density of the electric motor is higher, and the efficiency of the electric motor is improved.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A wheeled power tool, comprising:
a body;
a walking mechanism comprising walking wheels supporting the body; and
an electric motor configured to drive the walking wheels to rotate, wherein the electric motor comprises a stator and a rotor rotating relative to the stator, the stator comprises a stator core and a plurality of windings disposed on the stator core, the stator core comprises tooth portions for winding the plurality of windings, and the rotor comprises a rotor core and a plurality of magnetic steels disposed on the rotor core;
wherein the number of the tooth portions is 12, the number of magnetic pole pairs formed by the plurality of magnetic steels is 10 or 14, and an included angle α between two corresponding magnetic steels among the plurality of magnetic steels forming each of the magnetic pole pairs is greater than or equal to 30° and less than or equal to 45°.

2. The wheeled power tool according to claim 1, wherein the included angle α between the two corresponding magnetic steels forming each of the magnetic pole pairs is greater than or equal to 35° and less than or equal to 40°.

3. The wheeled power tool according to claim 1, wherein rated power of the electric motor is greater than or equal to 1.5 kW and less than or equal to 8 kW.

4. The wheeled power tool according to claim 1, wherein rated power of the electric motor is greater than or equal to 3 kW and less than or equal to 6 kW.

5. The wheeled power tool according to claim 1, wherein each of the plurality of windings comprises a first wire and a second wire, and a wire diameter of the first wire is different from a wire diameter of the second wire.

6. The wheeled power tool according to claim 5, wherein the each of the plurality of windings further comprises a third wire, a wire diameter of the third wire is different from the wire diameter of the first wire, and the wire diameter of the third wire is different from the wire diameter of the second wire.

7. The wheeled power tool according to claim 1, wherein an operating voltage of the electric motor is 56 V. A maximum value of an operating current of the electric motor is from 30 A to 150 A.

8. The wheeled power tool according to claim 1, wherein a maximum value of an operating current of the electric motor is greater than or equal to 30 A and less than or equal to 150 A.

9. The wheeled power tool according to claim 1, wherein an outer diameter of the stator is greater than or equal to 120 mm and less than or equal to 135 mm.

10. The wheeled power tool according to claim 1, wherein a split ratio of the stator is greater than or equal to 0.5 and less than or equal to 0.6.

11. The wheeled power tool according to claim 1, wherein a ratio of a length of each of the plurality of magnetic steels to a radius of the rotor is greater than or equal to 0.3 and less than or equal to 0.4.

12. The wheeled power tool according to claim 9, wherein a length of each of the plurality of magnetic steels is greater than or equal to 11 mm and less than or equal to 13.5 mm.

13. The wheeled power tool according to claim 9, wherein a radius of the rotor is greater than or equal to 65/2 mm and less than or equal to 75/2 mm.

14. The wheeled power tool according to claim 1, wherein the wheeled power tool is a mower, a snow thrower, or an outdoor walking vehicle.

15. A wheeled power tool, comprising:
a body;
an executing mechanism configured to perform a function of the wheeled power tool;
a walking mechanism comprising walking wheels supporting the body; and
an electric motor configured to drive the executing mechanism to operate, wherein the electric motor comprises a stator and a rotor rotating relative to the stator, the stator comprises a stator core and a plurality of windings disposed on the stator core, and the rotor comprises a rotor core and a plurality of magnetic steels disposed on the rotor core;
wherein the plurality of magnetic steels form a plurality of magnetic pole pairs, and an included angle α between two corresponding magnetic steels among the plurality of magnetic steels forming each of the magnetic pole pairs is greater than or equal to 30° and less than or equal to 45°.

16. The wheeled power tool according to claim 15, wherein the included angle α between the two corresponding magnetic steels forming each of the magnetic pole pairs is greater than or equal to 35° and less than or equal to 40°.

17. The wheeled power tool according to claim 15, wherein the executing mechanism comprises a cutting deck for mowing grass, an auger assembly, or an impeller assembly.
